# EUROPEAN PATENT APPLICATION

(11) **EP 1 779 907 A1**
(43) Date of publication of application: **02.05.2007**
(21) Application number: 06022245.2
(22) Date of filing: 24.10.2006
(51) Int. Cl.: A63F 13/02

(54) **Terminal device of gaming machine, game machine, and game method**

(30) Priority: 25.10.2005 JP 2005310271
(71) Applicant: Aruze Corporation, Tokyo 135-0063 (JP)
(72) Inventor: Okada, Kazuo, Tokyo 135-0063 (JP)
(74) Representative: HOFFMANN EITLE

(57) **Abstract**

A terminal device has a selection unit and a memory unit. The selection unit selects, in accordance with an input made by a player, any one of execution of a game processing and display of an image different from a game image. When the player acquires a different image display item in the course of a game, the memory unit stores therein data about the item. When the selection unit selects display of the different image, a display unit display the different image based on the data stored in the memory unit.

## Description

### BACKGROUND OF THE INVENTION

### 1. Field of the Invention

The present invention relates to a terminal device used in a multiplayer-type gaming machine which allows participation of two or more players, and also relates to a gaming machine and a game method.

### 2. Description of Related Art

A multiplayer-type gaming machine, commonly named a mass-game machine, is known. The multiplayer-type gaming machine is exemplified by a horse-race gaming machine. The horse-race gaming machine includes a gaming machine body having a large-scale main display, and terminal devices each having a sub display and mounted on the gaming machine body. The gaming machine body and the respective terminal devices are connected to each other via a communication cable capable of transmitting and receiving information necessary for a game. Each of the terminal devices has a seat for a player to sit on. The seat is positioned so as to make a player face the main display.

In the mass-game machine, racehorses and odds for them are displayed on the main display and the sub display. Each player, who is sitting on the seat, performs various operations while watching the sub display, to select a racehorse and bet medals on it. Then, on the main display, the racehorses run a race. Depending on a result of the race, medals are paid out on the basis of the predetermined odds (see Japanese Patent Unexamined Publication No. 8-206355).

### SUMMARY OF THE INVENTION

Mass-game machines are often intended for a long-time game such as the horse-race game mentioned above. Accordingly, the seat has such a mechanism that enables a player to be untired even though he/she keeps sitting for a long time. However, during a long-time game, a player sometimes becomes inclined for a change of pace. At this time, the player temporarily stops the game and takes a break, but it takes him/her much time to return to the game. Thus, it is desirable that a player can have a change of pace in a short time in order to return to a game earlier.

An object of the present invention is to provide a terminal device for a gaming machine, a gaming machine, and a game method that allow a player a change of pace in a shorter time as compared with when the player takes a break while temporarily stopping the game.

According to a first aspect of the present invention, there is provided a terminal device that is used in a multiplayer-type gaming machine and used by each player. The terminal device comprises a display unit, an input unit, a game processing unit, an image processing unit, a selection unit, and a memory unit. The input unit receives an input made by a player. The game processing unit makes the display unit display a game image while progressing a game with an acquirable game value. The image processing unit makes the display unit display an image different from the game image. The selection unit selects, in accordance with an input made through the input unit, any one of execution of a game processing by the game processing unit and display of the different image by the image processing unit. When the player acquires a different image display item in the course of a game being executed by the game processing unit in accordance with an input made through the input unit, the memory unit stores therein data about the item. When the selection unit selects display of the different image by the image processing unit, the image processing unit makes the display unit display the different image based on the data stored in the memory unit.

According to a second aspect of the present invention, there is provided a game method comprising the steps of a game processing, an image processing, and a selection. In the game processing step, a game image is displayed while progressing a game with an acquirable game value. In the image processing step, an image different from the game image is displayed. In the selection step, any one of the game processing step and the image processing step is selected in accordance with an input made by a player. When the image processing step is selected in the selection step, the different image is displayed in this image processing step based on data about a different image display item which has been acquired in the course of the game.

In the first and second aspects, when a player becomes inclined for a change of pace during a long-time game for example, he/she can watch an image different from a game image based on the different image display item acquired in the course of the game. This allows the player to have change of pace in a shorter time as compared with when he/she takes a break while temporarily stopping the game. Moreover, this makes the game more amusing, because items acquired during the game are spent on charges for watching the different image.

According to a third aspect of the present invention, there is provided a terminal device that is used in a multiplayer-type gaming machine and used by each player. The terminal device comprises a display unit, an input unit, a game processing unit, an image processing unit, a selection unit, and a memory unit. The input unit receives an input made by a player. The game processing unit makes the display unit display a game image while progressing a game with an acquirable game value. The image processing unit makes the display unit display an image different from the game image. The selection unit selects, in accordance with an input made through the input unit, any one of execution of a game processing by the game processing unit and display of the different image by the image processing unit. When the player acquires points in the course of a game being executed by the game processing unit in accordance with an input made through the input unit, the memory unit stores therein data about the points. When the selection unit selects display of the different image by the image processing unit, the image processing unit makes the display unit display the different image based on the data stored in the memory unit.

In the third aspect, when a player becomes inclined for a change of pace during a long-time game for example, he/she can watch an image different from a game image based on the points acquired in the course of the game. This allows the player to have change of pace in a shorter time as compared with when he/she takes a break while temporarily stopping the game. Moreover, this makes the game more amusing, because points acquired during the game are used for paying charges for watching the different image.

### BRIEF DESCRIPTION OF THE DRAWINGS

Other and further objects, features and advantages of the invention will appear more fully from the following description taken in connection with the accompanying drawings in which:
FIG. 1 is a perspective view of an appearance of a gaming machine according to an embodiment of the present invention;
FIG. 2 is a perspective view of an appearance of a terminal device that is included in the gaming machine;
FIG. 3 is an enlarged perspective view of a movement mechanism of the terminal device;
FIG. 4 is a perspective view of the terminal device with its chair in a seat mode;
FIG. 5 is a perspective view of the terminal device with its chair in a bed mode;
FIG. 6 is a perspective view showing a sub display of the terminal device being taken out of a storage space;
FIG. 7 is a perspective view showing the sub display of the terminal device whose display screen is opposed to a player;
FIG. 8 is a perspective view showing the sub display of the terminal device which has been adjusted into position;
FIG. 9 is a block diagram showing an electrical construction of the gaming machine;
FIG. 10 is a block diagram showing an electrical construction of a main controller of a gaming machine body that is included in the gaming machine;
FIG. 11 is a block diagram showing an electrical construction of the terminal device;
FIG. 12 is a perspective view of an appearance of the gaming machine, showing a state where a macroquest is occurring in a game field;
FIG. 13 is a perspective view of an appearance of the gaming machine, showing a state where a player who, in the state of FIG. 12, was not yet involved in the macroquest has newly entered the macroquest;
FIG. 14 is a flowchart showing processings that are executed in accordance with a selection made by a player during a game;
FIG. 15 is a flowchart showing an interrupt processing that is executed by the terminal device;
FIG. 16 is a flowchart showing a first selection processing that is executed in S8 and S18 of FIG. 15;
FIG. 17 is a flowchart showing a show display processing that is executed in S13 of FIG. 15;
FIG. 18 is a flowchart showing a rest processing that is executed in S20 of FIG. 15;
FIG. 19 is a flowchart showing a second selection processing that is executed in C5 of FIG. 18;
FIG. 20 illustrates a game screen that is displayed on the sub display;
FIG. 21 illustrates a main selection screen that is displayed on the sub display;
FIG. 22 illustrates a food selection screen that is displayed on the sub display;
FIG. 23 illustrates a drink selection screen that is displayed on the sub display;
FIG. 24 illustrates a show screen that is displayed on the sub display;
FIG. 25 illustrates a game screen that is displayed on the sub display; and
FIG. 26 illustrates that a rest invitation window appears in a game screen.

### DESCRIPTION OF THE PREFERRED EMBODIMENTS

In the following, a certain preferred embodiment of the present invention will be described with reference to the accompanying drawings.

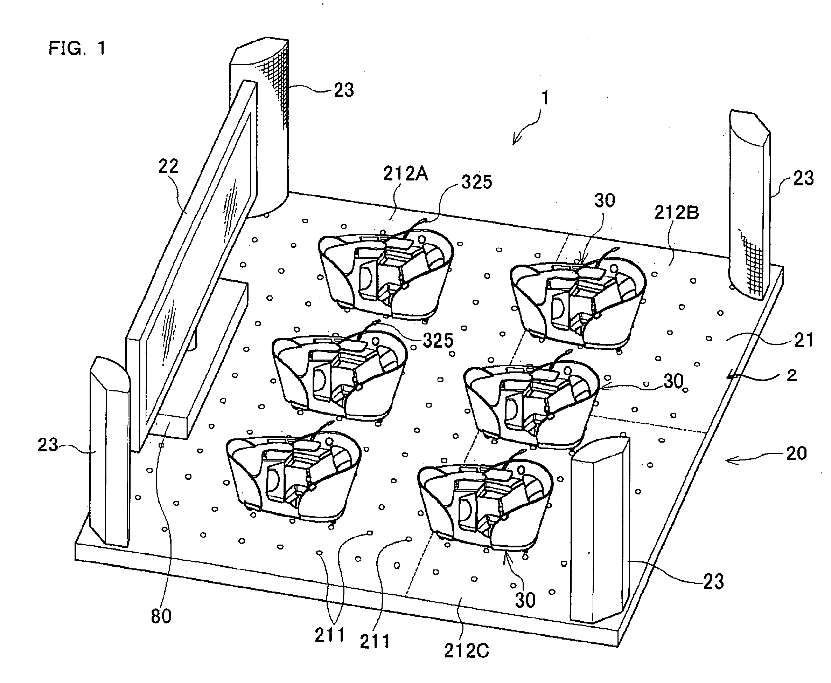

A gaming machine 1 according to an embodiment of the present invention, which is shown in FIG. 1, is a so-called mass-game machine of multiplayer type. The gaming machine 1 has a gaming machine body 20 and six terminal devices 30. The gaming machine body 20 includes a play area 21 having a rectangular shape in a plan view. The six terminal devices 30 are placed in the play area 21. The respective terminal devices 30 are capable of data communication with the gaming machine body 20. The gaming machine body 20 manages operations of the respective terminal devices 30 so that all the terminal device 30 are linked thus sharing a game processing executed in any terminal device 30.

The gaming machine body 20 has a plate-like floor member 2, a main display 22, speakers 23, and a main controller 80. An upper face of the floor member 2 is defined as the play area 21. The main display 22 is disposed along one side of the floor member 2. The speakers 23 are disposed at four corners of the floor member 2. The main controller 80 controls the main display 22 and the speakers 23.

The play area 21 is divided into three sub areas, namely a city area 212A, a sea area 212B, and a forest area 212C. In the floor member 2, IC tags 211 are embedded in a grid layout. Information about positioning within the play area 21 is stored in the IC tags 211.

The main display 22 is a large-scale projector that displays an image based on an image data item outputted from the main controller 80. However, the main display 22 is not limited thereto, but may be a large-scale monitor. The main display 22 is disposed so that it can be seen from players who are using the terminal devices 30, and images concerning operations of all the terminal devices 30 are displayed on the main display 22. Thus, by seeing the main display 22, a player using a terminal device 30 can know how the other terminal devices 30 operate.

The main controller 80 is capable of two-way communication with each of the terminal devices 30 through a wireless LAN. The main controller 80 executes a predetermined game program and performs two-way communication with the respective terminal devices 30, thereby providing a virtual space that is common to players who are using the terminal devices 30.

In an initial state before a game is started, the terminal devices 30 are regularly positioned with their heads facing the main display 22. Once a game is started, each of the terminal devices 30 can move within the play area 21 in accordance with a command from the main controller 80 or in accordance with an operation made by a player who is using this terminal device 30.

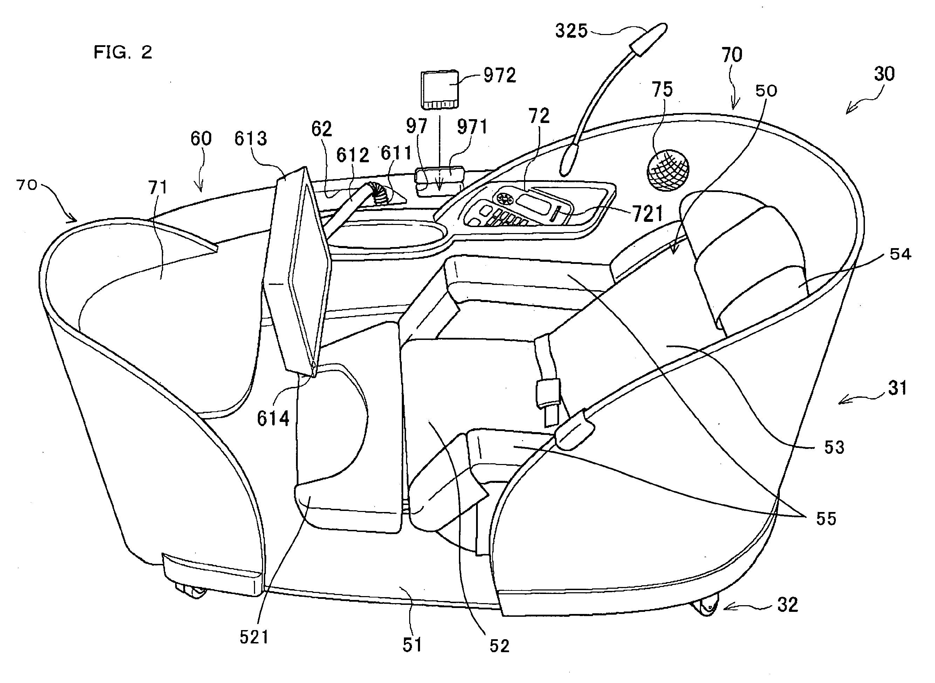

As shown in FIG. 2, the terminal device 30 has a main body 31 and a movement mechanism 32. The movement mechanism 32 is disposed under the main body 31, and moves the terminal device 30 within the play area 21. In FIG. 2, the head of the terminal device 30 faces the left side.

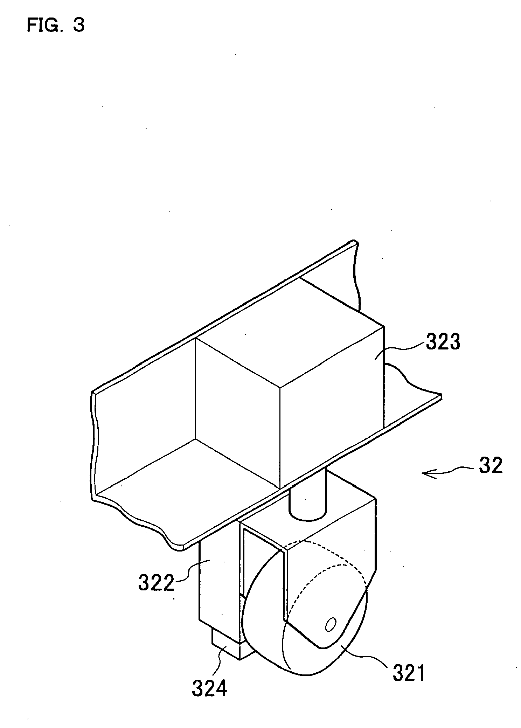

The movement mechanism 32 has four tires 321 (one of which is shown in FIG. 3). Provided for each of the tires 321 are a drive controller 322, a direction controller 323, a rechargeable battery (not shown), and an IC tag sensor 324. The drive controller 322 rotationally drives the tire 321. The direction controller 323 controls a direction of the tire 321. The rechargeable battery supplies electric power to the drive controller 322 and the direction controller 323. The IC tag sensor 324 senses the IC tags 211 that are embedded in the play area 21. Charging the rechargeable battery may be implemented by connection to an external power source. Alternatively, the floor member 2 may have a built-in magnetic field generator which generates a magnetic field, so that a self-induced electromotive force of this magnetic field may be used to charge the rechargeable battery.

The main body 31 has a base 51, a pair of large and small shells 70, a side unit 60, and a chair 50. The base 51 has a flat-plate shape. The shells 70 are standing at front and rear ends of the base 51, respectively, so that each of the shells 70 surrounds the main body 31 from three directions. The side unit 60 is disposed so as to stand along one side face of the base 51. The chair 50 is disposed on the base 51, to locate in a space surrounded with the shells 70 and the side unit 60. A side face of the main body 31 opposite to the side unit 60 is partially opened in order that a player can get on and off therethrough.

The chair 50 includes a seat 52, a backrest 53, a pair of sidearms 55, a headrest 54, and a legrest 521. The seat 52 is supported on the base 51 in a movable manner. The backrest 53 is mounted on the seat 52 at a variable angle with the seat 52. The sidearms 55 are provided on both sides of the seat 52 and the backrest 53. The headrest 54 is mounted at a top of the backrest 53. The legrest 521 is mounted at a front end of the seat 52. The chair 50 takes such a position that a player sitting thereon faces toward the head of the terminal device 30, i.e., leftward in FIG. 2.

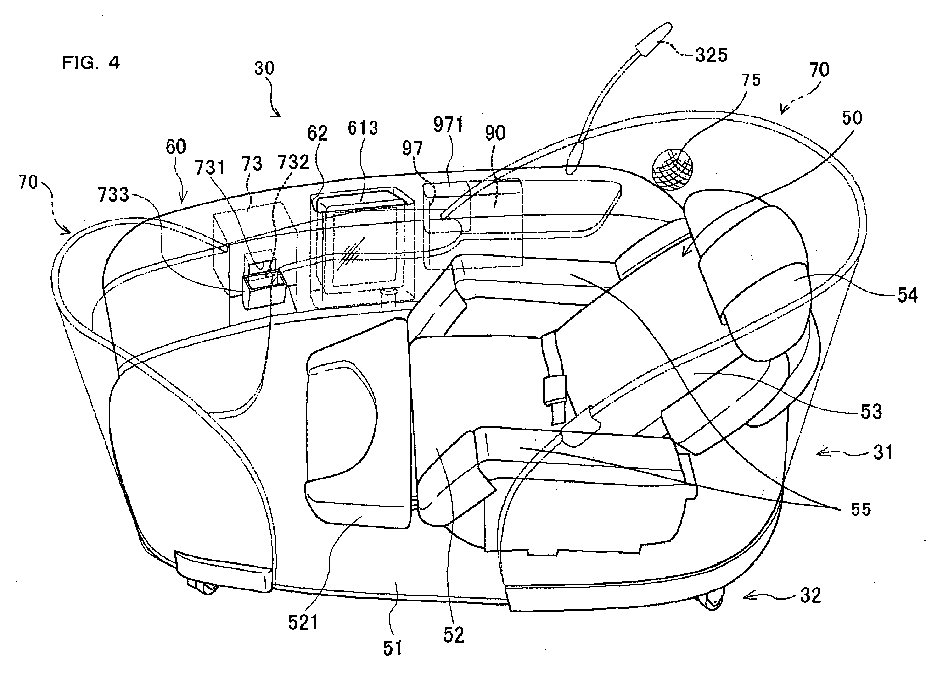

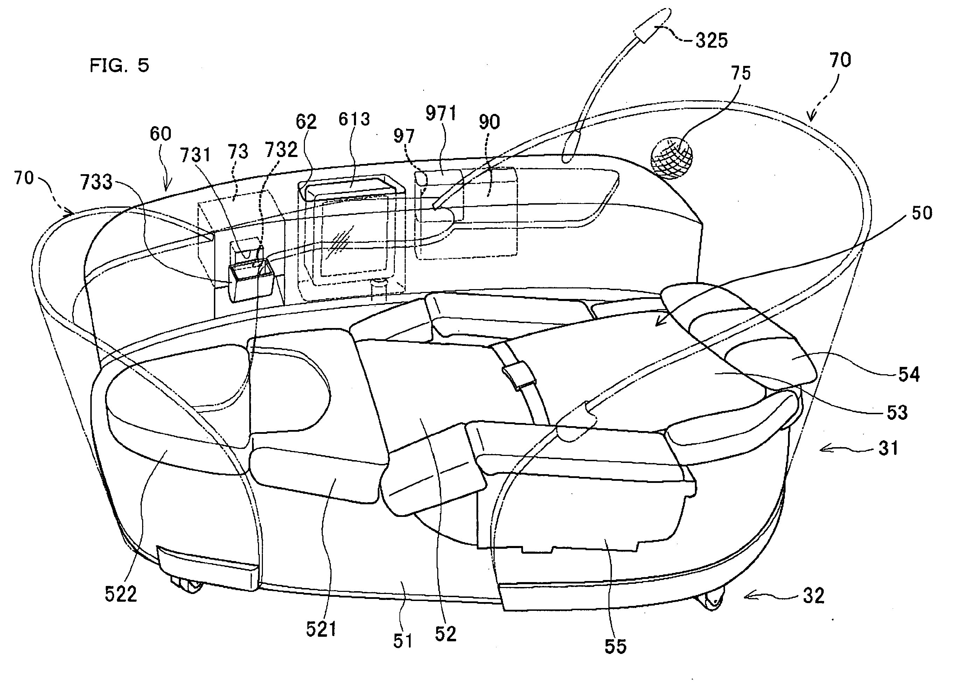

As a player operates an input unit 72, the seat 52 is slid on the base 51 frontward or rearward, which means leftward or rightward in FIG. 2. A mode of the chair 50 is switchable between a seat mode as shown in FIG. 4 and a bed mode as shown in FIG. 5.

By being slid frontward, the seat 52 which is in the seat mode as shown in FIG. 4 gets into the bed mode as shown in FIG. 5 and thus forms a bed. To be more specific, along with frontward sliding of the seat 52, the legrest 521 swings upward so that a surface of the legrest 521 forms a plane continuous with a surface of the seat 52. A footrest 522 is accommodated in a front end of the legrest 521. Along with swinging of the legrest 521, the footrest 522 gets protruding out of the legrest 521, into such a position that its surface forms a plane continuous with the surface of the legrest 521. Along with frontward sliding of the seat 52, the backrest 53 gets falling down rearward, and a front of each sidearm 55 swings slightly upward.

The seat 52, a lower part of the backrest 53 which comes into contact with a waist of a player, and the headrest 54 respectively have built-in bags into which air can be injected. When air is injected into the bag by use of a pump, a surface rises so as to conform to curves of a body of a player.

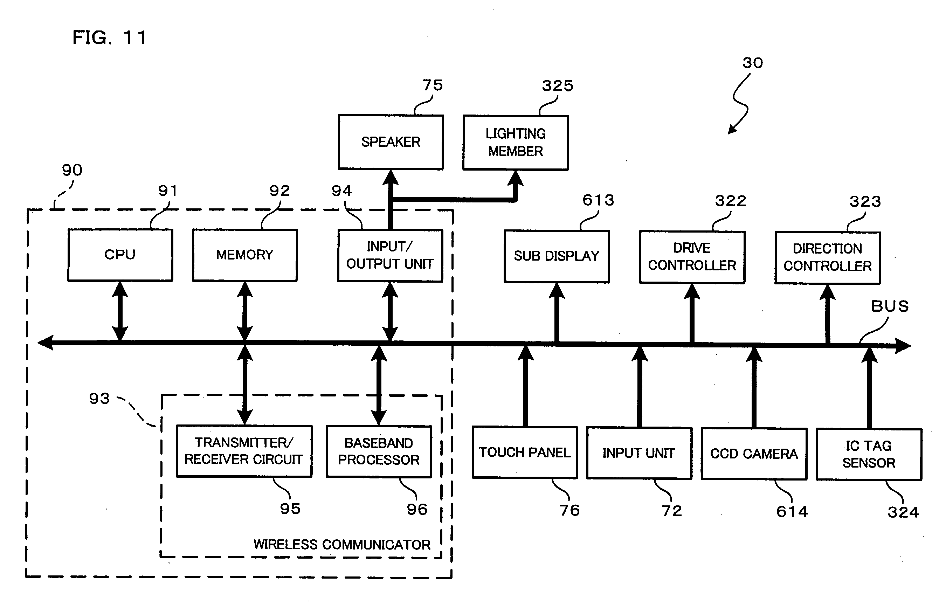

As shown in FIGS. 4 and 5, the side unit 60 has a storage space 62 that extends in a vertical direction. A sub display 613 having a rectangular shape and implementing a liquid crystal display is stored in the storage space 62. The sub display 613 functions as a display unit of the present invention. A touch panel 76 (see FIG. 11) is provided on the sub display 613. The touch panel 76, together with the input unit 72, functions as an input unit of the present invention. As shown in FIG. 2, the sub display 613 is supported on the side unit 60 via a first arm 611 and a second arm 612. The first arm 611 is fixed to a face that defines a bottom of the storage space 62, and extends along the vertical direction. The first arm 611 is extendable and retractable in the vertical direction with respect to the side unit 60. The second arm 612 is connected to an upper end of the first arm 611. The second arm 612 is extendable and retractable, and moreover its angle with respect to an axis of the first arm 611 can arbitrarily be changed. The sub display 613 is fixed to an upper end of the second arm 612 at an arbitrary angle with respect to an axis of the second arm 612.

The sub display 613 has a built-in CCD camera 614 of small size. The CCD camera 614 is used to create an avatar in a game field. Operating the input unit 72 causes the sub display 613 to display an image that has been taken by the CCD camera 614. This produces more fun because a player can see his/her own face during a game. The image taken may be displayed throughout a whole screen of the sub display 613, or alternatively may be displayed in a part of the screen. The sub display 613 is, only when needed, taken out of the storage space 62.

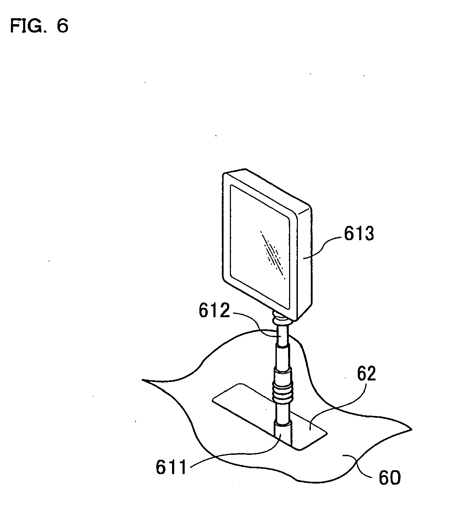

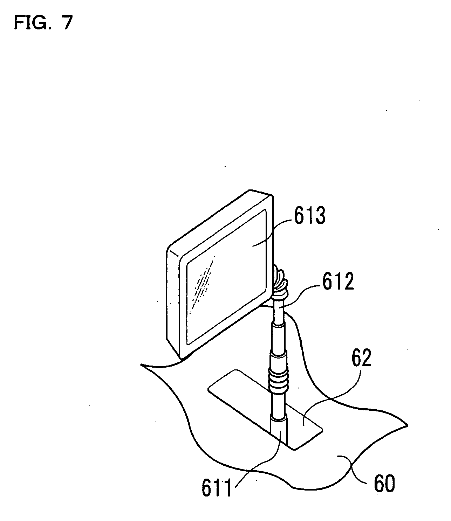

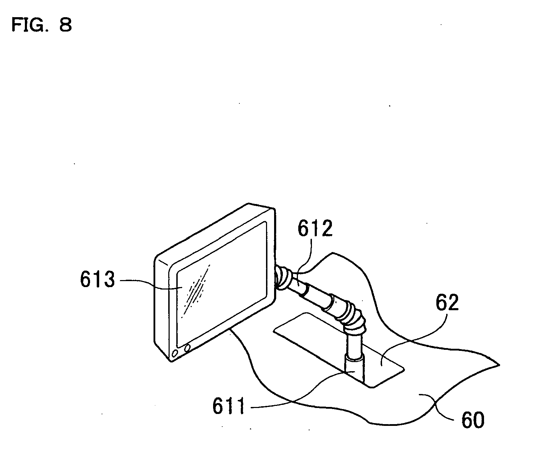

Here, how a player takes the sub display 613 out of the storage space 62 will be described with reference to FIGS. 6, 7, and 8. While sitting in the chair 50, the player firstly holds the sub display 613 that is stored within the storage space 62, and takes the sub display 613 upward out of the storage space 62, to extend the first arm 611 and the second arm 612 as shown in FIG. 6. Then, the player twists the sub display 613 as shown in FIG. 7 so as to make the screen of the sub display 613 face the player. Then, as shown in FIG. 8, the player adjusts a relative angle between the first arm 611 and the second arm 612, and a relative angle between the second arm 612 and the sub display 613, so that the sub display 613 locates on his/her eye level.

As shown in FIGS. 4 and 5, a sub controller 90 is provided inside the side unit 60. The sub controller 90 is connected to the main controller 80 (see FIG. 1) through a wireless LAN. Based on commands from the main controller 80, the sub controller 90 controls the sub display 613 and the movement mechanism 32, and in addition transmits to the main controller 80 a signal that has been inputted from the input unit 72. The side unit 60 has a slot 97, on the upper side of which an openable and closable covering 971 is provided to close/open the slot 91. As shown in FIG. 2, the covering 971 is opened and a terminal control board 972 is inserted into the slot 97.

Due to the pair of shells 70 and the side unit 60, a player sitting in the chair 50 is kept invisible from another player. The large shell 70 has speakers 75 provided on both sides of the headrest 54. A rear of the large shell 70 extends upward so that it reaches a position higher than the headrest 54 in the seat mode.

A stick-like support is attached in the vicinity of the input unit 72 of the large shell 70. A lighting member 325 is mounted on an end of the support. The lighting member 325 is positioned high, so that a manager of a game arcade can see the lighting member 325 from any viewpoint outside the play area 21. The lighting member 325 has, at its inside, three types of LED chips that emit red light, blue light, and green light, respectively. A reflective frame is formed around each of the LED chips. The red light, the blue light, and the green light emitted from the respective LED chips are mixed by the reflective frames, so that the lighting member 325 light with six lighting modes, e.g., violet light, yellow light, white light, green light, blue light, and red light.

There is provided a table 71 that extends from a front of the main body 31 alongside the side unit 60. While the chair 50 is in the bed mode, the footrest 522 is received under a front part of the table 71 (see FIG. 5). The input unit 72 is provided in a portion of the table 71 locating on a side of the sidearm 55, which can be operated by a player who is sitting in the chair 50. The input unit 72 includes a coin insertion slot, a start button, a card slot 721 for insertion of a credit card or a member's card, a keyboard, a jog dial, etc.

Inside the side unit 60, as shown in FIG. 4, a medal reservoir 73 is provided on a front side of the storage space 62. Medals reserved in the medal reservoir 73 are paid out through a medal payout opening 731 and received by a medal receiver 732. The medal receiver 732 has a holder (not shown) that is used for mounting a medal box 733 to the medal receiver 732.

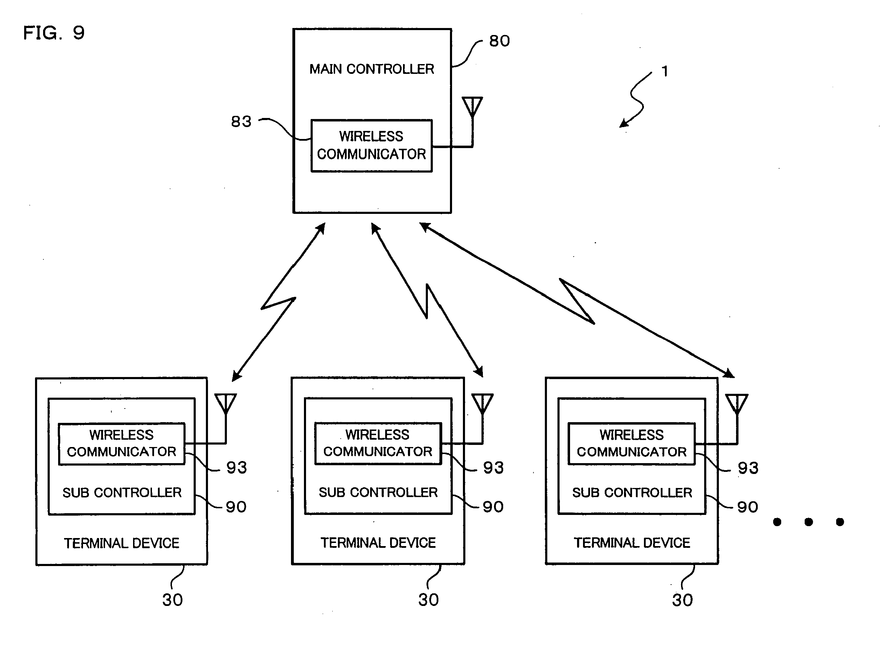

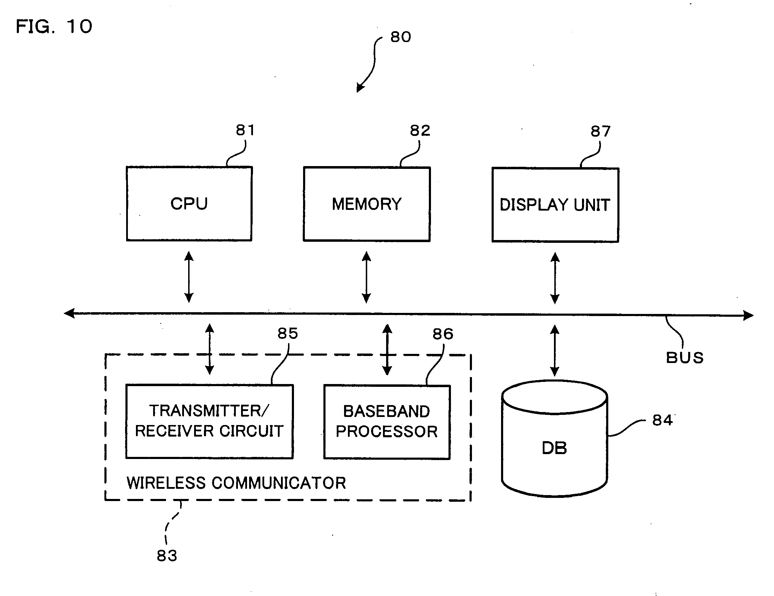

Next, an electrical construction of the gaming machine 1 will be described with reference to FIGS. 9 and 10.

As shown in FIG. 9, the main controller 80 of the gaming machine body 20 has a wireless communicator 83, and the sub controller 90 of each terminal device 30 has a wireless communicator 93. The wireless communicator 83 is capable of two-way communication with each wireless communicator 93 through a wireless LAN, so that a sound data item and a literal data item are transmitted or received between the main controller 80 and the sub controllers 9.0.

As shown in FIG. 10, the main controller 80 has a CPU 81, a memory 82, the wireless communicator 83, a database 84, and a display unit 87 which are respectively connected to a data bus. The wireless communicator 83 includes a transmitter/receiver circuit 85 and a baseband processor 86. The transmitter/receiver circuit 85 transmits or receives signals to/from the sub controllers 90. The baseband processor 86 converts a radio-frequency signal that has been received by the transmitter/receiver circuit 85 into a baseband signal, and also converts the baseband signal that is intended to be transmitted into a radio-frequency signal.

The database 84 is a circuit board including a memory in which a game program is stored, or is a memory medium in which a game program is stored such as a hard disk or a ROM cassette. A circuit board or a memory medium which forms the database 84 is removable, and therefore a game program executed by the gaming machine 1 can be replaced if necessary. Replacement of game programs is not necessarily made through hardware like the above, but may be made by downloading a game program through a communication network.

The CPU 81 transmits or receives data to/from the sub controllers 90 of the respective terminal devices 30 through the wireless communicator 83, in accordance with the following procedure. When transmitting data to the sub controller 90, the CPU 81 converts the data into a packet data item. At this time, the CPU 81 attaches to the packet data item an IP address of the terminal device 30 that is a destination of the packet data item. On receiving data from a sub controller 90 of a terminal device 30, the CPU 81 identifies which terminal device 30 has transmitted the data, based on an IP address attached to the data as a packet data item.

The CPU 81 reads a game program stored in the database 84, out into the memory 82, and executes the game program to thereby progress a game.

To be more specific, the CPU 81 receives from each terminal device 30 data including an input data item and, based on the input data item, generates a single game data item in accordance with the game program. Then, based on the signal game data item, the CPU 81 generates an image data item which is common to all the terminal devices 30, and outputs the image data item to the respective terminal devices 30. The single game data item includes data about operative characters, each of which moves within one game field that is generated based on the game program in accordance with an input data item inputted from a corresponding terminal device 30, and also includes position data items for the respective operative characters.

On receiving an input data item from a terminal device 30, the CPU 81 identifies which terminal device 30 has transmitted the input data item, based on an IP address attached to the input data item. Then, based on the input data item, the CPU 81 operates an operative character corresponding to the identified terminal device 30. When a position data item for an operative character corresponding to a terminal device 30 satisfies a predetermined condition, the CPU 81 transmits to the terminal device 30 a movement signal that designates a position of the terminal device 30.

During a game, in accordance with a request from a terminal device 30, the CPU 81 derives from the database 84 a game program, information that indicates a temporary status in a game field, that is, information that indicates an event currently occurring in the game field, and the like. The CPU 81 transmits the derived information to the requesting terminal device 30 through the wireless LAN. The CPU 81 receives from each terminal device 30 information indicating a result of operation made by a player, and stores the information into the memory 82. Based on the information indicating a result of operation made by a player which is stored in the memory 82, the CPU 81 advances the game program, and stores into the database 84 a result of advancing of the game program.

The information indicating a result of operation made by a player means information that is transmitted from a terminal device 30 when a player operates the terminal device 30. The information indicating a result of operation made by a player includes, for example, information indicating a result of a player's selection from options that are given to him/her through the terminal device 30 in accordance with a progress of the game program, information indicating a result of a player's operation on a character that appears in the game, or the like. A game status of each player, such as high-score information, is stored in the database 84, and can be checked by other players.

The display unit 87 is a liquid crystal display device including a liquid crystal panel and a display controller that controls displaying of the liquid crystal panel. The display unit 87 displays thereon contents of orders from players who are operating the respective terminal devices 30, and lighting modes of the lighting members 325 corresponding to the contents of the respective orders. Based on the contents of orders and lighting modes that are displayed on the display unit 87, the manager of the game arcade gives services to the players.

Next, an electrical construction of the terminal device 30 will be described with reference to FIG. 11.

As shown in FIG. 11, the sub controller 90 of the terminal device 30 has a CPU 91, a memory 92, a wireless communicator 93, and an input/output unit 94, which are respectively connected to a data bus. The input/output unit 94 works as an interface with the speakers 75 and the lighting member 325. The input/output unit 94 outputs a sound signal to the speakers 75 to thereby make the speakers 75 output a sound relating to a game, and outputs a lighting signal to the lighting member 325 to thereby light the LED in a predetermined lighting mode. The wireless communicator 93 includes a transmitter/receiver circuit 95 and a baseband processor 96. The transmitter/receiver circuit 95 transmits and receives signals to and from the main controller 80. The baseband processor 96 converts a radio-frequency signal that has been received by the transmitter/receiver circuit 95 into a baseband signal, and also converts a baseband signal that is intended to be transmitted into a radio-frequency signal.

The memory 92 stores therein programs used for various controllings and used for a game, and the like. The memory 92 functions as a memory unit of the present invention. In accordance with a program executed by the CPU 81, the CPU 91 executes a program stored in the memory 92, thereby performing various processings as described below.

To be more specific, when transmitting data to the main controller 80 via the wireless communicator 93, the CPU 91 converts the data into a packet data item. At this time, the CPU 91 attaches, to the packet data item, an IP address of the terminal device 30 that is transmitting this packet data item. The IP address is an identifier that serves to identify each one of the terminal devices 30. When receiving data from the main controller 80 via the wireless communicator 93, the CPU 91 determines whether an IP address attached to the data as a packet data item is identical to an IP address of the terminal device 30 to which the CPU 91 belongs. When the IP address attached to the received data is identical to that of the corresponding device 30, the CPU 91 captures the packet data item. When otherwise, the CPU 91 discards the packet data item.

The CPU 91 controls the sub display 613, the drive controller 322, or the direction controller 323 in accordance with an input signal inputted from the input unit 72, the CCD camera 614, or the IC tag sensor 324. The IC tag sensor 324 reads, from the IC tag 211, position information that functions as a current position data item, and outputs the information. The CPU 91 transmits, to the main controller 80, an input data item including data about literal information, specific selection information, etc., which accord with inputs made through the input unit 72, a face image data item for a player which has been imaged by the CCD camera 614, and a current position data item which has been outputted from the IC tag sensor 324.

On receiving from the main controller 80 a movement signal that designates a position of the terminal device 30, the CPU 91 recognizes where in the play area 21 the terminal device 30 locates, based on a current position data item that is outputted from the IC tag sensor 324. Then, the CPU 91 controls the drive controller 322 and the direction controller 323 of the movement mechanism 32, so as to move the terminal device 30 to a position as designated by the movement signal.

Moreover, the CPU 91 controls the drive controller 322 and the direction controller 323 of the movement mechanism 32 based on an input data item that is outputted from the input unit 72 or the touch panel 76 of the sub display 613.

On receiving from the main controller 80 a game program, information indicating a temporary status in a game field or the like, the CPU 91 stores the game program, the above-mentioned information or the like into the memory 82. Then, in accordance with the game program stored in the memory 82, the CPU 91 makes the sub display 613 display an event such as various happenings which is currently occurring in the game field, and also makes the speakers 75 output an effect sound. On receiving a lighting mode data item from the main controller 80, the CPU 91 makes the lighting member 325 light in a lighting mode that corresponds to this lighting mode data item.

Each of players who are using the terminal devices 30 operates the input unit 72 or the touch panel 76 of the sub display 613, while watching game contents that are displayed on the sub display 613 in the form of images, literal information, and the like. Thus, he/she can participate in progress of game by operating a character appearing on the main display 22 or selecting literal options, and also can move the terminal device 30 to a certain position within the play area 21.

Next, a game program that is executed in the gaming machine 1 will be described.

The game program is a program for a role-playing game that is presented in a stage of a virtual game field and constantly progresses along its own time axis. There are towns in the virtual game field, and a guild is created in each of the towns. A player plays a role of an adventurer who visits the towns. The adventurer aims to, by operating an avatar, clear a number of events, i.e., quests, waiting in the respective guilds. In addition, some big events, i.e., macroquests, occur in the game field, to make a general flow of a story. A player gets involved in a macroquest even while clearing quests. The player sometimes cooperates with, sometimes fights against, and sometimes competes with other players in the course of clearing the macroquest.

A flow in the game field changes depending on how the players operate the terminal devices 30. That is, an accumulation of plays made by each one of the players creates a history of the game field. Like this, the game program provides a role-playing game in which all players can experience a flow of a history of a virtual world. In the game field, a history is established along a nonstop time axis of its own. Characters appearing in the game field are neither ageless nor deathless, but getting old like in the real world.

A name of a player who has played an active role, such as clearing a macroquest, winning competition with another player, etc., is written into a chronological table that is stored in the database 84. Therefore, a player who has played an active role in clearing a macroquest has his/her name recorded in the history of the game field.

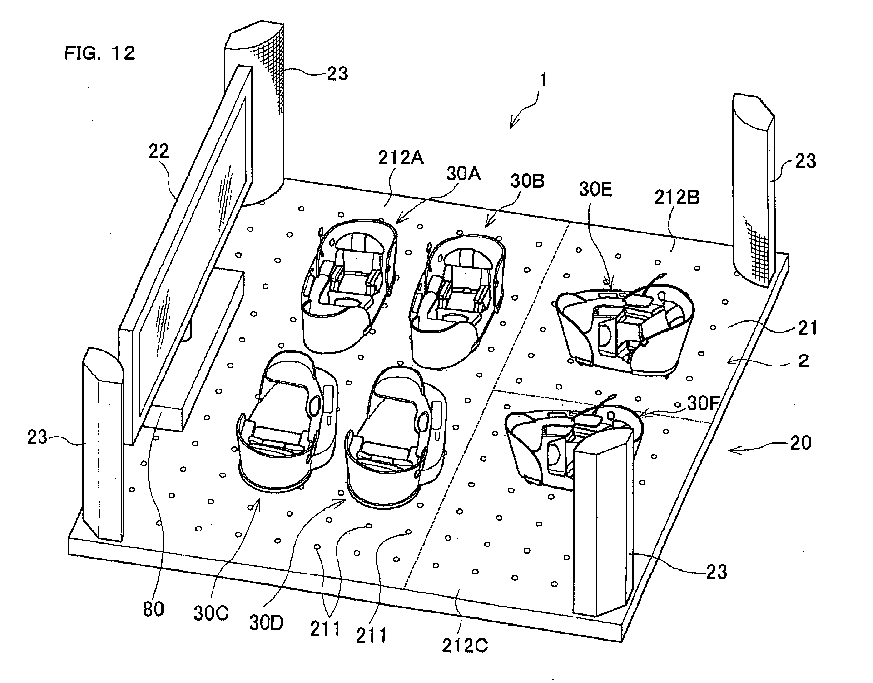

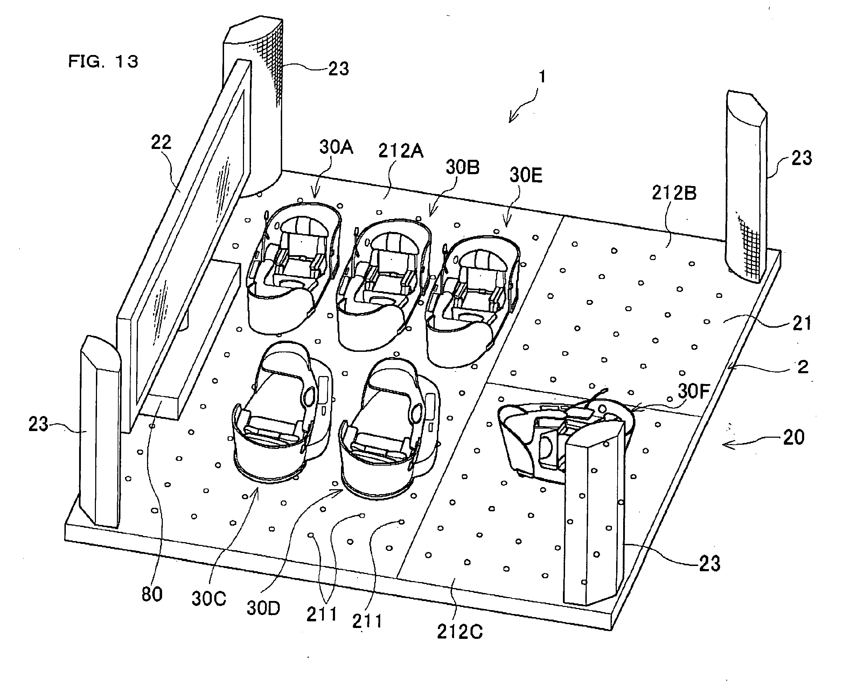

Next, with reference to FIGS. 12 and 13, a specific description will be given to a macroquest processing.

When a macroquest involving two or more players occurs in the game field, the main controller 80 makes the main display 22 display players who have been involved in the macroquest, and moves terminal devices 30 of the players who have been involved in the macroquest, to the city area 212A which locates in front of the main display 22. There, terminal devices 30 of opposed players are positioned close to and confronting each other (see FIG. 12).

Among six terminal devices 30A, 30B, 30C, 30D, 30E, and 30F which are placed within the play area 21, players riding on the terminal devices 30A, 30B, and 30E organize a party, and players riding on the terminal devices 30C, 30D, and 30F organize another party. The players riding on the terminal devices 30A to 30D which locate in the city area 212A are involved in a macroquest, and positioned so as to confront the players of the opposed party. On the other hand, the players riding on the terminal devices 30E and 30F which locate in the sea area 212B and the forest area 212C, respectively, are not involved in the macroquest, and thus watch a battle between the players riding on the terminal devices 30A to 30D.

The player involved in the macroquest selects whether to ask for help from a companion or not in order to clear the macroquest. When the player asks for help, a mail asking for help is transmitted to a companion. Through the sub display 613, the companion is advised to select whether to help or not. When the companion who has been asked for help accepts to help, the sub display 613 of the asking player shows that the companion has accepted to help. Thus, the main display 22 shows that the companion is gathering, while the terminal device 30 of the player who has accepted to help and newly enter the macroquest moves to the city area 212A. There, terminal devices of opposed players are positioned close to and confronting each other (see FIG. 13). More specifically, in the city area 212A, the players riding on the terminal devices 30A, 30B, and 30E fight a battle against the players riding on the terminal devices 30C and 30D.

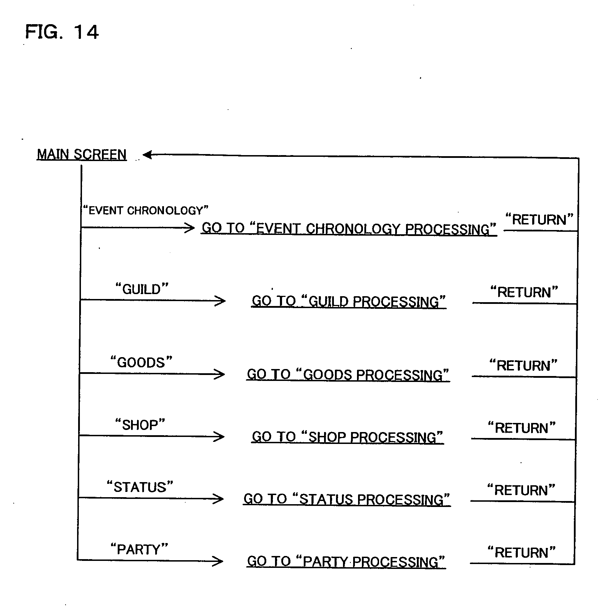

Next, with reference to FIG. 14, a description will be given to respective processings that are executed based on selections made by a player. The sub display 613 displays options including "Event Chronology", "Guild", "Goods", "Shop", "Status", and "Party". A player can select any of the options.

When a player selects "Event Chronology", the main controller 80 reads an event chronology out of the database 84, and executes an event-chronology processing to thereby display the event chronology on the sub display 613. The event chronology shows a name of each quest and a date in the time axis of the game field at which each quest was cleared. When the player selects a name of a quest, details of the quest are displayed. Details of the quest mean, for example, a name of a player who has cleared the quest fastest, in a case where a player who has cleared the quest fastest is considered as a winner. Details of the quest mean, alternatively, a name of a party including a maximum number of players among parties which have cleared the quest, in a case where a party including maximum number of players is considered as a winner.

When a player selects "Guild", the main controller 80 executes a guild processing and makes the sub display 613 display a guild screen. The guild screen indicates buttons of "Quest" which can be challenged by the player in the guild, "Another Town" in the game field to go, and the like. When the player selects "Quest", a list of quests selectable is displayed on the sub display 613. When the player selects a desired quest from the list of quests, the selected quest is executed. When the player selects to go "Another Town", a list of towns selectable as a next place is displayed on the sub display 613. When the player selects a desired town from the list of towns, he/she is placed in the town, that is, the main controller 80 moves the terminal device 30 of the player to any of the sub areas 212A, 212B, or 212C that corresponds to the selected town. In the next town as well, the player can select "Guild", "Goods", "Shop", or the like.

When a player selects "Goods", the main controller 80 executes a goods processing and makes the sub display 613 display a goods screen that includes options of goods such as weapons, tools, shoes, etc. When the player selects a good, the main controller 80 makes the sub display 613 display items that are included in the selected good. The player can select an item from the displayed items, and can be equipped with or discard the selected item.

When a player selects "Shop", the main controller 80 executes a shop processing and makes the sub display 613 display a shop screen. The shop screen indicates options of "Listen" and "Exchange", which can be selected by a player. When the player selects "Listen", the sub display 613 shows "Rumor", so that the player obtains information about the game field from a shopkeeper. When the player selects "Exchange", the sub display 613 shows a list of goods. When the player selects a desired item from the list of goods, the sub display 613 shows player's items on hand and their values. From the items on hand, the player selects an item for exchange, and selects an "Enter" button, so that items are exchanged.

When a player selects "Status", the main controller 80 executes a status processing and makes the sub display 613 display a status screen. The status screen shows a result of activities the player performed in the game field, to be more specific, particulars such as "Name of Player", "Title", "Fame", "Physical Strength", "Intelligence", "Number of Monsters Defeated", "Number of Quests Cleared", "Number of People Saved", "Goods", and the like. When the player selects any of these particulars, a ranking concerning the selected particular is displayed on the sub display 613.

When a player selects "Party", the main controller 80 executes a party processing and makes the sub display 613 display names of companions, if any. Further, the sub display 613 displays options such as "Read Mail", "Send Mail", "Exchange Items", and "See Status". By selecting any of the options, the player can transmit or receive a mail to/from a companion, exchange items with a companion, see a status of a companion, or the like.

Next, an operation of the gaming machine 1 will be described.

First, a player chooses favorite one among terminal devices 30 that are placed within the play area 21, and sits in the chair 50. Then, the player inserts a coin into the coin insertion slot of the input unit 72, and presses a start switch. This unlocks the sub display 613 and the chair 50 of the gaming machine 1. The player takes the sub display 613 out of the storage space 62 of the side unit 60, and adjusts a mode of the chair 50.

Then, a game is started. First, the main controller 80 creates an avatar that represents a player in a game field. More specifically, the CCD camera 614 images a face of a player, and at the same time an avatar-creating screen is displayed on the sub display 613 so that the player inputs through the input unit 72 his/her personal information and a name that will be used in the game field. Based on such information, the main controller 80 creates an avatar, and registers the avatar in the database 84.

Subsequently, the main controller 80 initially positions the terminal device 30, which will be used by the player, in the play area 21 (see FIG. 1). Towns existing in the game field are ones surrounded with seas or forests, or may be metropolises or the like. The city area 212A, the sea area 212B, the forest area 212C of the play area 21 are virtual spaces that correspond to environments of respective towns existing in the game field.

That is, at the time when a game is started, the main controller 80 sets a town in the game field where each player exists, and places a terminal device 30 of each player in one of the sub areas 212A, 212B, and 212C which corresponds to the town where the player exists. Alternatively, the terminal device 30 may be moved in accordance with an operation on the input unit 72 made by each player, and a town in the game field where the player exists may be set in accordance with this movement of the terminal device 30. Then, the main controller 80 progresses a game along an original time axis while generating a macroquest which will be handled by several players and a quest which will be handled by one player. When a game comes to an end, the sub display 613 is stored in the storage space 62, and the chair 50 returns into the seat mode.

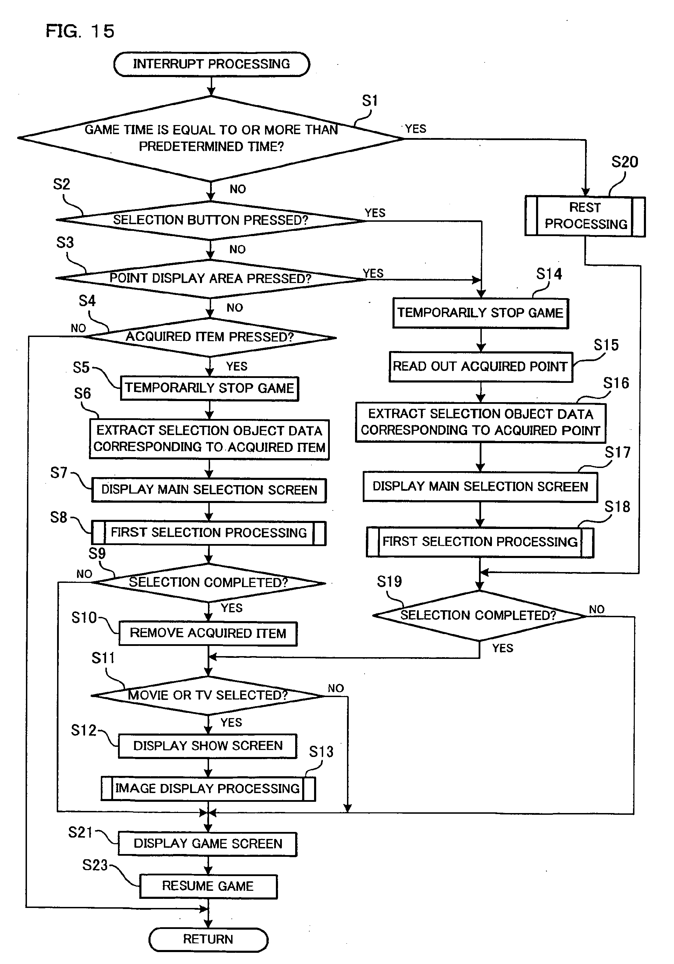

The sub controller executes an interrupt processing shown in FIG. 15 during a game, in addition to a game processing that displays a game image on the sub display 613 and while progressing a game with an acquirable game value. Here, the game value means acquired points which are shown in an area 101a, acquired items which are shown in an area 101b, and the like.

In the interrupt processing shown in FIG. 15, first, the sub controller 90 determines whether a game time is equal to or more than a predetermined period of time (S1). When the game time is equal to or more than the predetermined period of time (S1: YES), the sub controller 90 executes a rest processing which will be described later (S20). When the game time is neither equal to nor more than the predetermined period of time (S1: NO), the sub controller 90 determines whether a selection button of the input unit 72 is pressed or not (S2).

When the selection button is pressed (S2: YES), the game is temporarily stopped (S14). Then, points acquired during the game are read out (S15), and selection object data corresponding to these acquired points is extracted (S16). The selection data includes specific items in respective categories of television, movies, food, and drink, which are respectively associated with points. For example, items in the drink category include a coffee for 100 points, a tea for 50 points, and the like. Extracted in S16 are data about selection objects that are associated with points equal to or less than the acquired points.

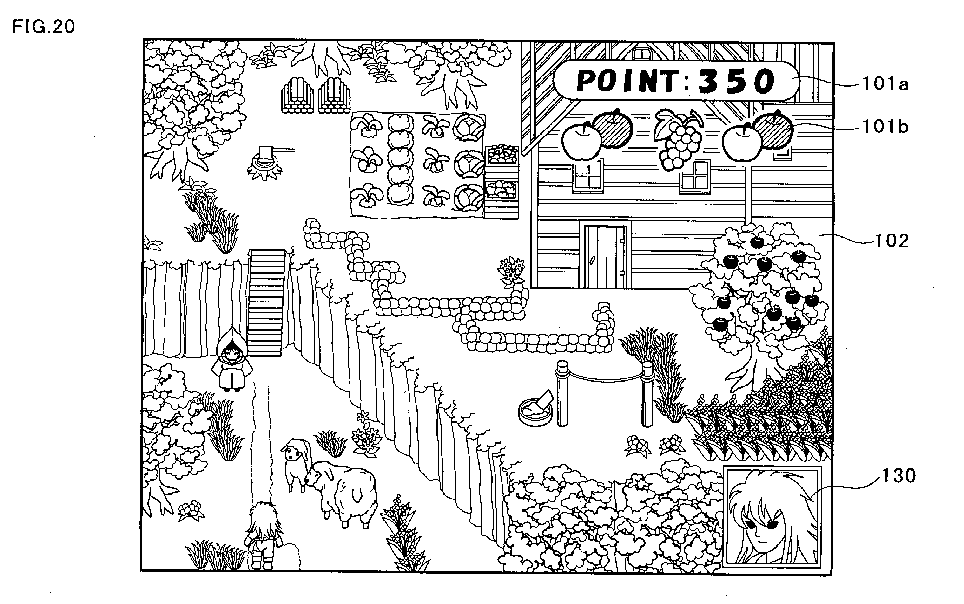

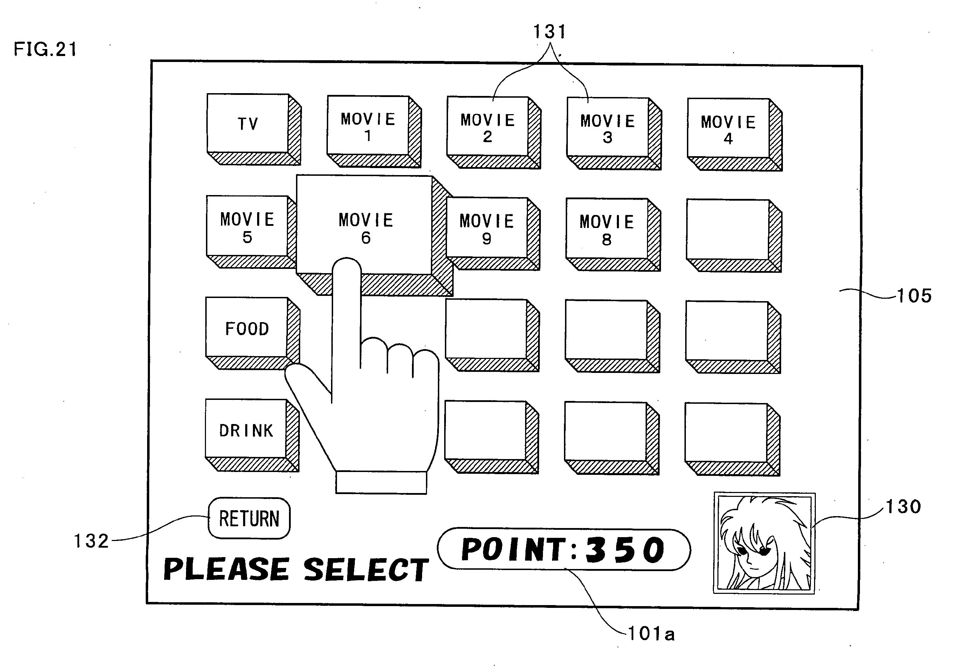

Then, a display on the sub display 613 is changed from a game screen shown in FIG. 20 into, for example, a main selection screen shown in FIG. 21 (S17). With this main selection screen, a first selection processing is executed (S18).

A game image area 102 is formed throughout a whole area of the game screen. In this area 102, a character, etc., moves along with progress of the game. An avatar display area 130 is formed in the area 102. An avatar that represents a player in a game field is displayed in the avatar display area 130. A selection area 105 is formed throughout a whole area of the main selection screen. In this area 105, selection buttons 131 are listed in a matrix pattern, and a message of "PLEASE SELECT" is shown. The selection buttons 131 correspond to selection objects relating to the data extracted in S16. To be specific, a title of a movie, one scene of a movie, etc., is indicated on the selection button 131. When a selection button 131 is pressed, a size of the selection button 131 becomes larger than its usual size. This allows a player to recognize that he/she has surely pressed the selection button 131. An avatar display area 130, a point display area 101a, and a return button are formed in the selection area 105. The return button 132 is for returning to a former closest operation. Characters of "RETURN" are indicated on the return button 132.

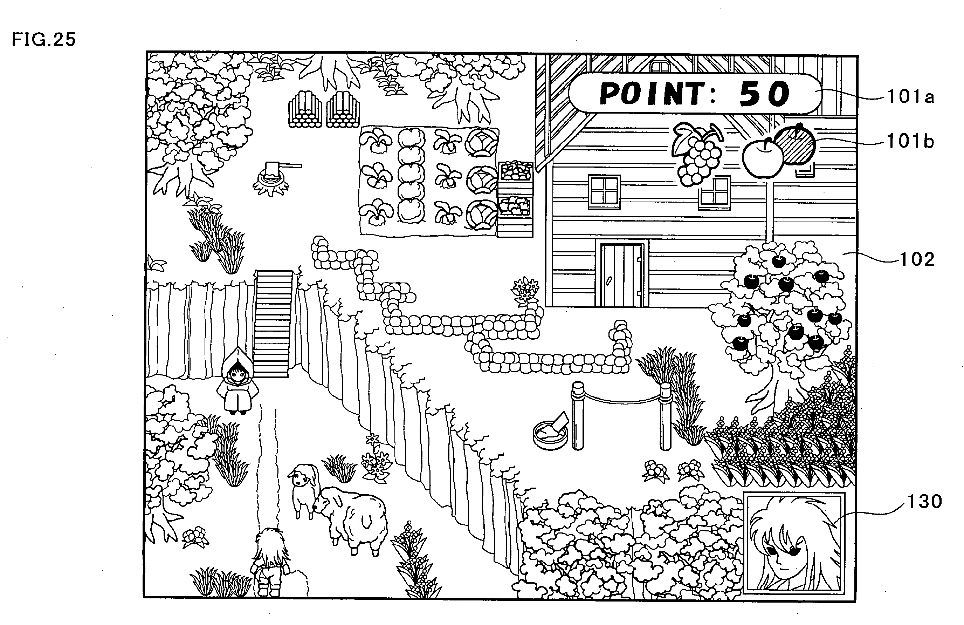

After S18, whether a selection is completed or not is determined (S19). When a selection is completed (S19: YES), the processing goes to S11. When a selection is not completed (S19: NO), a display on the sub display 613 is changed into a game screen as shown in FIG. 25 for example (S21). In FIG. 25, as compared with in FIG. 20, points are reduced by 300 and one of the acquired items is removed.

When the selection button is not pressed (S2: NO), then whether the point display area 101a shown in FIG. 20 is pressed or not is determined (S3). When the area 101a is pressed (S3: YES), like when the selection button is pressed in S2, the game is temporarily stopped (S14). When the area 101a is not pressed (S3: NO), then whether any of the items shown in the acquired item display area 101b is pressed or not is determined (S4). When none of the items shown in the area 101b is pressed (S4: NO), this routine ends.

When any of the items shown in the area 101b is pressed (S4: YES), the game is temporarily stopped (S5). Then, selection object data corresponding to the pressed item is extracted (S6). To be more specific, extracted are data about selection objects that are associated with points equal to or less than the points of the pressed item. After this, the main selection screen as shown in FIG. 21 for example is displayed on the sub display 613 (S7). With this main selection screen, a first selection processing is executed (S8). At this time, selection buttons 131 are presented in the main selection screen. These selection buttons 131 correspond to selection objects relating to the data extracted in S6.

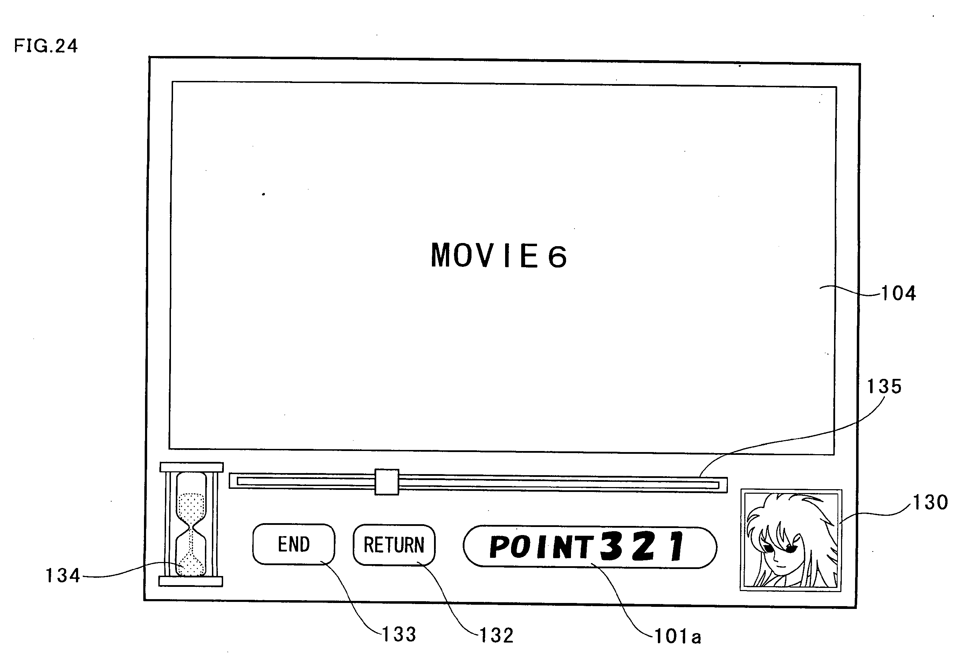

Subsequently, whether a selection is completed or not is determined (S9). When a selection is not completed (S9: NO), the processing goes to S21. When a selection is completed (S9: YES), the item that was pressed in S4 is removed from the screen of the sub display 613 and moreover data about this item is erased from the memory 92 (S10). Then, whether a movie or a television is selected or not is determined (S11). When something other than a movie and a television is selected (S11: NO), a display on the sub display 613 is changed into the game screen as shown in FIG. 25 for example (S21). When a movie or a television is selected (S11: YES), a show screen, as shown in FIG. 24 for example, is displayed on the sub display 613 (S12). Then, an image display processing which will be described later is executed (S13), and the processing goes to S21. After this, the game is resumed (S23), and this routine ends.

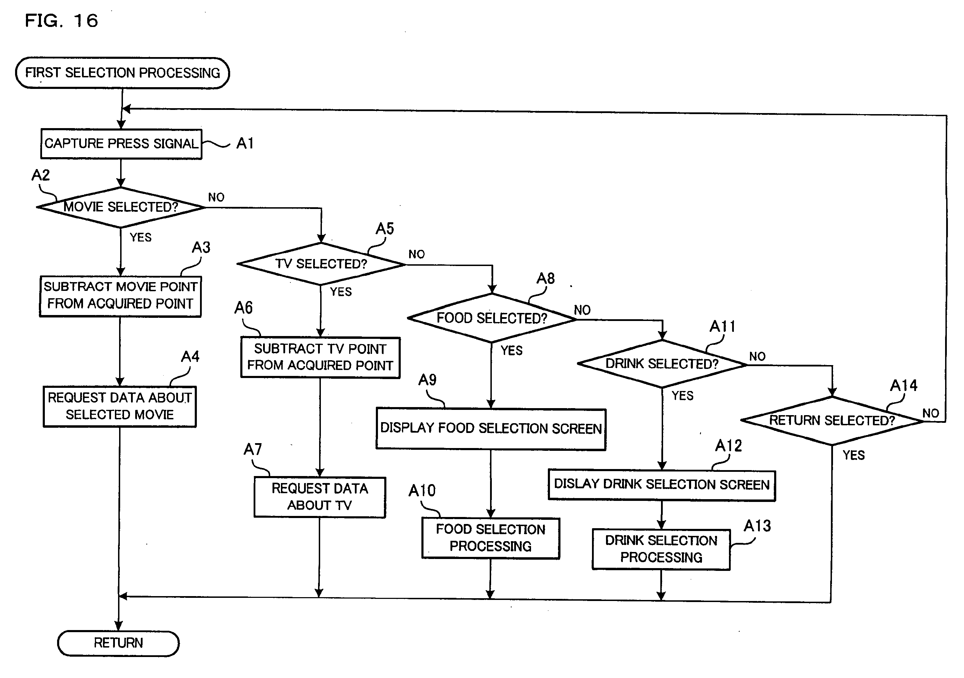

Next, a first selection processing that is executed in S8 and S18 of FIG. 15 will be described with reference to FIG. 16.

First, in the main selection screen shown FIG. 21, a press signal from the touch panel 76 is captured (A1). Then, whether a movie is selected or not is determined, by recognizing a display area that corresponds to a coordinate location indicated by this press signal (A2). When a movie is selected (A2: YES), a number of points associated with the movie is subtracted from the acquired point (A3). Then, the main controller 80 is requested for data about the selected movie (A4), and this routine ends.

When a movie is not selected (A2: NO), then whether a television is selected or not is determined (A5). When a television is selected (A5: YES), a number of points associated with the television is subtracted from the acquired point (A6). Then, the main controller 80 is requested for data about a television program (A7), and this routine ends.

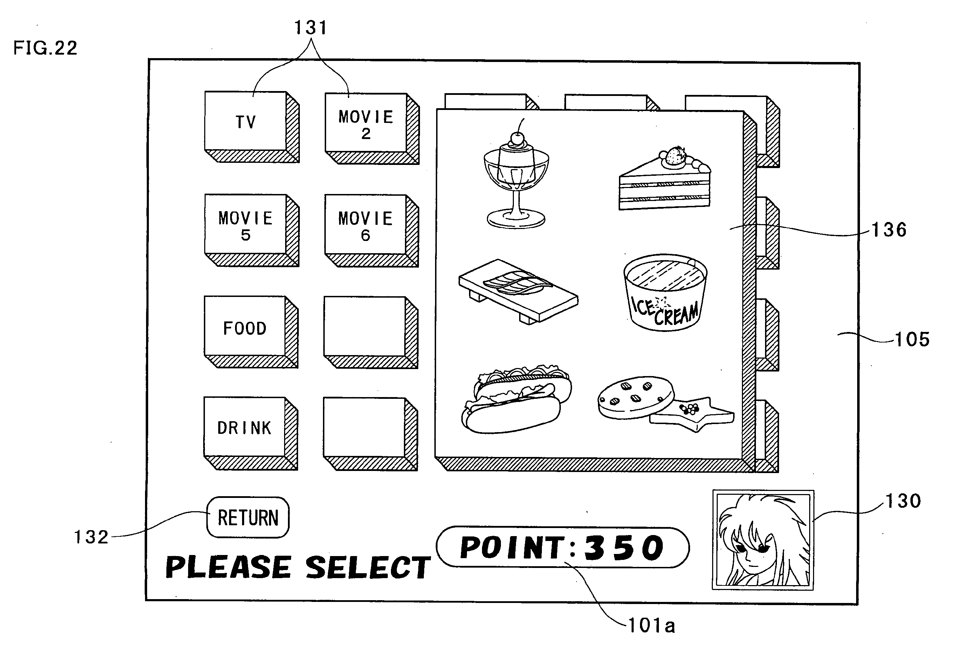

When a television is not selected (A5: NO), then whether a food is selected or not is determined (A8). When a food is selected (A8: YES), a food selection screen shown in FIG. 22 is displayed on the sub display 613 (A9). With this food selection screen, a food selection processing is executed (A10). More specifically, a player presses an icon of his/her favorite food in a food menu displayed in a food selection window 136, to thereby order the food from the main controller 80. Thus, a number of points associated with the ordered food are subtracted from the acquired point, and this routine ends.

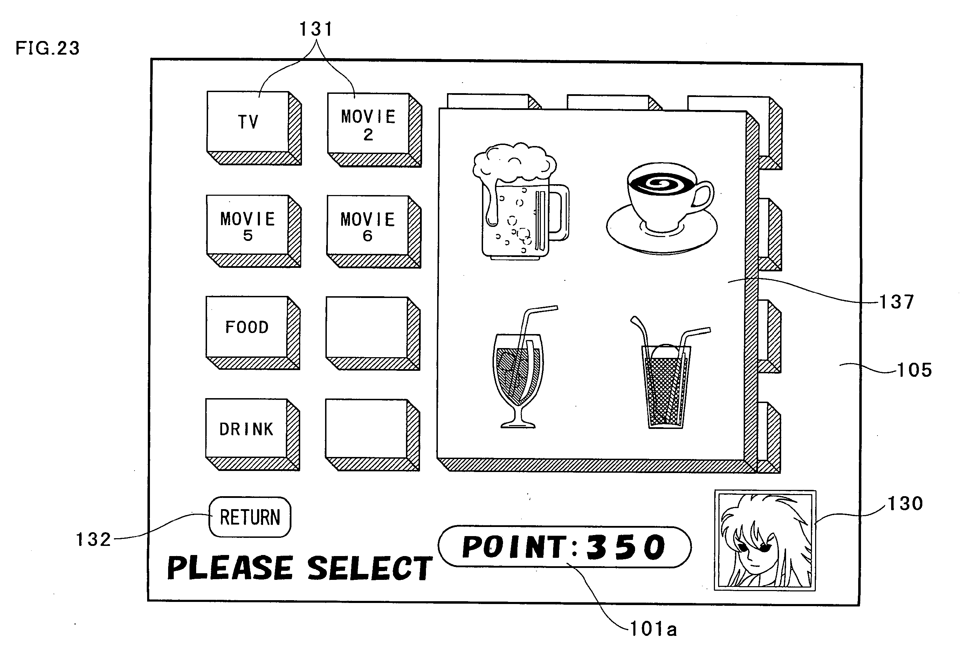

When a food is not selected (A8: NO), then whether a drink is selected or not is determined (A11). When a drink is selected (A11: YES), a drink selection screen shown in FIG. 23 is displayed on the sub display 613 (A12). With this drink selection screen, a drink selection processing is executed (A13). More specifically, a player presses an icon of his/her favorite drink in a drink menu displayed in a drink selection window 137, to thereby order the drink from the main controller 80. Thus, a number of points associated with the ordered drink are subtracted from the acquired point, and this routine ends.

When a drink is not selected (A11: NO), whether a return is selected or not is determined based on whether the return button 132 is pressed or not (A14). When a return is selected (A14: YES), this routine ends. When a return is not selected (A14: NO), it is determined that a player made an improper pressing, and the processing returns to A1.

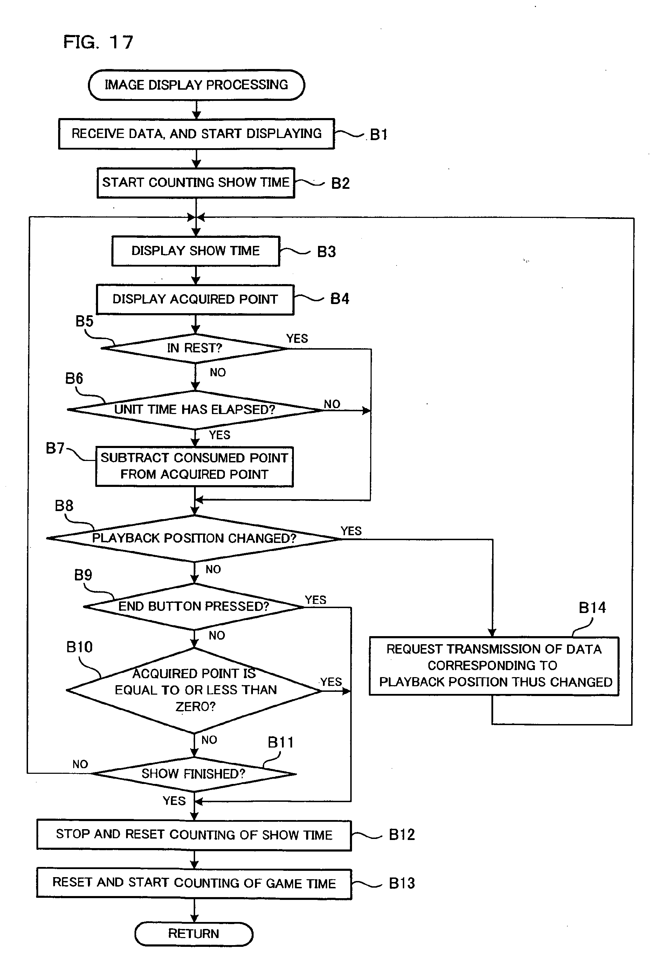

Next, an image display processing that is executed in S13 of FIG. 15 will be described with reference to FIG. 17.

First, data about a movie or a television is received from the main controller 80, and an image relating to this data is displayed on a window 104 shown in FIG. 24 (B1). Then, counting a show time is started (B2), and the show time is shown by means of an icon of a sandglass 134 (B3). The acquired points are shown in a point display area 101a (B4). Whether it is now in rest or not is then determined (B5). When it is in rest now (B5: YES), the processing goes to B8. When it is not in rest now (B5: NO), then whether a unit time has elapsed or not is determined (B6). When a unit time has not elapsed (B6: NO), the processing goes to B8.

When a unit time has elapsed (B6: YES), consumed points are subtracted from the acquired point (B7). The consumed points mean a value resulting from dividing, by the unit time, an integrated value of the points associated with the movie and a total show time. As a consequence, the acquired points are decreased every time the unit time elapses. Decreasing points in accordance with a show time like this can motivate a player to stop watching a movie and resume a game at an early stage.

After B7, whether a playback position is changed by operating a progress adjusting button 135 or not is determined (B8). When a playback position is changed (B8: YES), the main controller 80 is requested to transmit data that corresponds to a playback position thus changed (B14). This enables a player to, while watching a movie or a television program, fast-forward the movie or television program and to skip a previously watched part of the movie or television program. Then, the processing returns to B3.

When a playback position is not changed (B8: NO), whether an end button 133 is pressed or not is determined (B9). When the end button 133 is not pressed (B9: NO), whether the acquired points are equal to or less than "0" or not is determined (B10). When the acquired points are neither equal to nor less than "0" (B10: NO), then whether the show is finished or not is determined (B11). When the show is not finished (B11: NO), the processing returns to B3.

When the end button is pressed (B9: YES), when the acquired points are equal to or less than "0" (B10: YES), or when the show is finished (B11: YES), a counting of the show time is stopped and reset (B12). A counting of the game time is reset and then started (B13). Thus, this routine ends.

When the point display area 101a is pressed during a show, a food selection area 136 of FIG. 22 and a drink selection area 137 of FIG. 23 appear, so that a player can order a food and/or a drink.

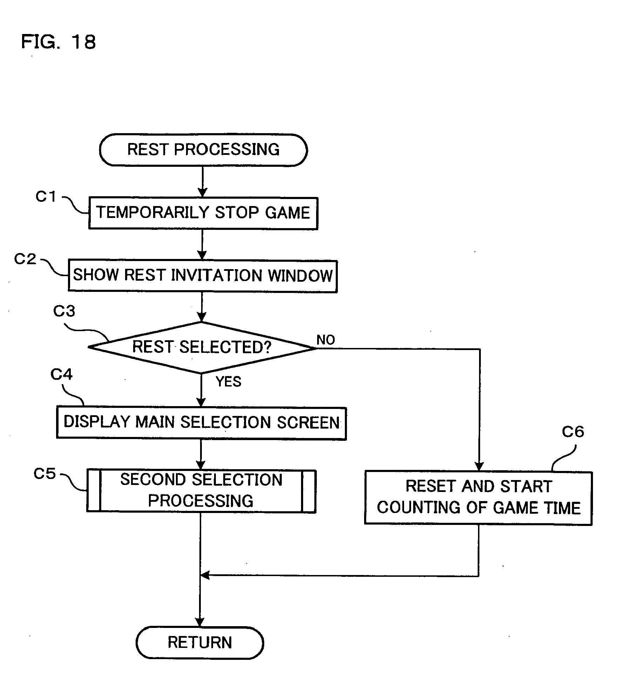

Next, a rest processing that is executed in S20 of FIG. 15 will be described with reference to FIG. 18.

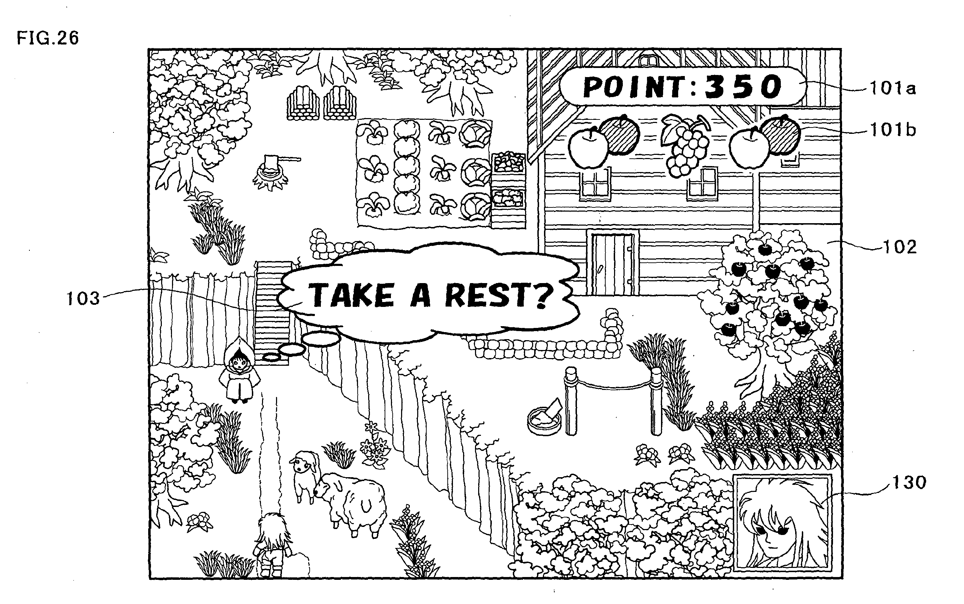

First, a game is temporarily stopped (C1). Then, as shown in FIG. 26, a rest invitation window 103 is shown in the game screen, in order to invite a player to take a rest (C2). Whether a rest is selected or not is determined (C3). More specifically, when a player presses the rest invitation window 103 it is determined that a rest is selected, while when a player presses a region of the game image screen 102 other than the rest invitation window 103 it is determined that a rest is not selected. When a rest is selected (C3: YES), the main selection screen as shown in FIG. 21 for example is displayed (C4). With this main selection screen, a second selection processing is executed (C5). Then, this routine ends. When a rest is not selected (C3: NO), the rest invitation window 103 is removed from the game screen. A counting of the game time is reset, and then started (C6). Then, this routine ends.

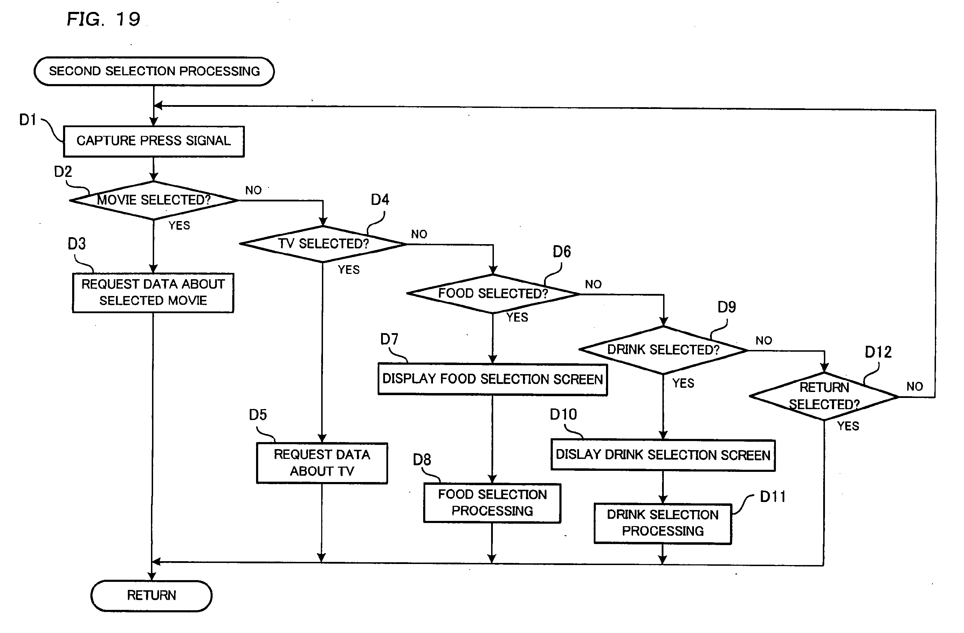

Next, a second selection processing that is executed in C5 of FIG. 18 will be described with reference to FIG. 19.

First, in the main selection screen shown in FIG. 21, a press signal from the touch panel 76 is captured (D1). Then, whether a movie is selected or not is determined, by recognizing a display area that corresponds to a coordinate location indicated by this press signal (D2). When a movie is selected (D2: YES), the main controller 80 is requested for data about the selected movie (D3), and this routine ends.

When a movie is not selected (D2: NO), then whether a television is selected or not is determined (D4). When a television is selected (D4: YES), the main controller 80 is requested for data about a television program (D5), and this routine ends.

When a television is not selected (D4: NO), then whether a food is selected or not is determined (D6). When a food is selected (D6: YES), a food selection screen shown in FIG. 22 is displayed on the sub display 613 (D7). With this food selection screen, a food selection processing is executed (D8). More specifically, a player presses an icon of his/her favorite food in a food menu displayed in a food selection window 136, to thereby order the food from the main controller 80. Then, this routine ends.

When a food is not selected (D6: NO), then whether a drink is selected or not is determined (D9). When a drink is selected (D9: YES), a drink selection screen shown in FIG. 23 is displayed on the sub display 613 (D10). With this drink selection screen, a drink selection processing is executed (D11). More specifically, a player presses an icon of his/her favorite drink in a drink menu displayed in a drink selection window 137, to thereby order the drink from the main controller 80. Then, this routine ends.

When a drink is not selected (D9: NO), whether a return is selected or not is determined based on whether the return button 132 is pressed or not (D12). When a return is selected (D12: YES), this routine ends. When a return is not selected (D12: NO), it is determined that a player made an improper pressing, and the processing returns to Dl.

Unlike the first selection processing, the second selection processing does not include subtracting from the acquired points a number of points associated with a selected movie, television, food, or drink. Thus, when a player continues to play a game for a predetermined period of time or longer, he/she can watch a movie, watch a television, order a food, or order a drink without subtraction of acquired points, that is, without charge. This can motivate the player to keep playing a game.

In the terminal device 30 of this embodiment, as thus far described above, when a player becomes inclined for a change of pace during a long-time game for example, he/she can watch an image different from a game image, e.g., a movie or television (see FIG. 24) based on items or points he/she has acquired in the course of the game (see S4 to S13 and S15 to S18 of FIG. 15). This allows the player to have change of pace in a shorter time as compared with when he/she takes a break while temporarily stopping the game. Moreover, this makes the game more amusing, because items or points acquired during the game are used for paying charges for watching a movie or television.

When a continuing game time is equal to or more than a predetermined period of time (S1: YES), a rest processing is executed (S20). In the rest processing, the rest invitation window 103 that invites a player to take a rest appears in the game screen (C2). As a consequence, a player can be invited to take a rest before he/she feels large fatigue. At this time, the player is invited to take a rest through the sub display 613. This makes it easy for the player, even under a noisy situation, to notice the rest invitation window 103 by seeing the sub display 613. Thus, the player can surely be invited to take a rest.

Acquired points which are represented by a numerical value and acquired items which are represented by pictures are game values, and data about these game values are displayed on the sub display 613. That is, the acquired points are displayed in the area 101a, and the acquired items are displayed in the area 101b (see FIG. 20). Accordingly, it is easy for a player to visually recognize game values he/she has acquired in the course of a game.

When the point display area 101a or an acquired item shown in the area 101b is pressed via the touch panel 76 (see S3 and S4 of FIG. 15), the first selection processing is executed (S8, S18) so that a player can watch a movie or television. This enables a player to intuitively understand that he/she can watch a movie or television by use of game values.

The selection buttons 131 that correspond to respective selection objects, that is, a television, various movies, foods, and drinks, are listed in the main selection screen of FIG. 21. Since a player can select favorite one of the selection objects listed, he/she can recover from fatigue early.

Since the selection objects include television programs and movie' programs, a player can select and watch a favorite program, to have change of pace and effectively recover from fatigue.

In the selection screen of FIGS. 22 and 23, a player can select and order favorite one(s) in the food menu and the drink menu displayed in the windows 136 and 137. A player can recover from fatigue early, because he/she can order food and/or drink during a game.

The gaming machine 1 of this embodiment has the six terminal devices 30 and the gaming machine body 20 that is capable of data communication with the respective terminal devices 30 and manages operations of the respective terminal devices 30 so that all the terminal devices 30 are linked thus sharing a game processing executed in any terminal device 30. Thus, while executing a game processing, the six terminal devices 30 are linked. Therefore, particular terminal devices 30 can cooperate or fight with each other during progress of a game.

The gaming machine 1 has the main display 22 on which operations of all the terminal devices 30 are displayed. The main display 22 is disposed so as to be seen from all the terminal devices 30. Therefore, by seeing the main display 22, a player can know how the other terminal devices 30 operate.

A memory unit of the present invention may be a memory card that is freely attachable and detachable to and from the terminal device 30 by being inserted into and pulled out of the terminal device 30.

A different image display item may be any item acquired in the course of a game, such as the acquired items shown in the area 101b (see FIG. 20) of the above-described embodiment. Alternatively, the different image display item may be a special item. The acquired items shown in FIG. 20 are two "apples" and one "grape", among which only the "apples" may be the different image display item or alternatively both the "apples" and the "grape" may be the different image display item.

In the above-described embodiment, displayed in S6 and S16 are selection objects that are associated with points equal to or less than points of the acquired item, or equal to or less than the acquired points. However, it may also be possible that all selection objects are displayed and a point deficit is balanced with coins or coupons. An insertion opening for coins or coupons may be provided in the input unit 72.

In the above-described embodiment, orders for foods and/or drinks are made by means of pressing on the touch panel 76. However, orders for foods and/or drinks may be made by means of pressing on non-illustrated switches or the like of the input unit 72.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the spirit and scope of the invention as defined in the following claims.

## Claims

1. A terminal device that is used in a multiplayer-type gaming machine and used by each player, **characterized by** comprising:
a display unit;
an input unit that receives an input made by a player;
a game processing unit that makes the display unit display a game image while progressing a game with an acquirable game value;
an image processing unit that makes the display unit display an image different from the game image;
a selection unit that selects, in accordance with an input made through the input unit, any one of execution of a game processing by the game processing unit and display of the different image by the image processing unit; and
a memory unit that, when the player acquires a different image display item in the course of a game being executed by the game processing unit in accordance with an input made through the input unit, stores therein data about the item,
wherein, when the selection unit selects display of the different image by the image processing unit, the image processing unit makes the display unit display the different image based on the data stored in the memory unit.

2. A terminal device that is used in a multiplayer-type gaming machine and used by each player, **characterized by** comprising:
a display unit;
an input unit that receives an input made by a player;
a game processing unit that makes the display unit display a game image while progressing a game with an acquirable game value;
an image processing unit that makes the display unit display an image different from the game image;
a selection unit that selects, in accordance with an input made through the input unit, any one of execution of a game processing by the game processing unit and display of the different image by the image processing unit; and
a memory unit that, when the player acquires points in the course of a game being executed by the game processing unit in accordance with an input made through the input unit, stores therein data about the points,
wherein, when the selection unit selects display of the different image by the image processing unit, the image processing unit makes the display unit display the different image based on the data stored in the memory unit.

3. The terminal device according to claim 1 or 2, **characterized by** further comprising:
a game time counter that counts a time for which the game processing unit continues executing the game processing; and
a rest invitation unit that makes such an output that invites the player to take a rest, when the time becomes equal to or more than a predetermined time.

4. The terminal device according to claim 3, **characterized in that** the rest invitation unit makes the output to the display unit, to make the display unit display an image inviting the player to take a rest.

5. The terminal device according to any one of claims 1 to 4, **characterized in that** an acquired point represented by a numerical value and an acquired item represented by a picture function as the game value, and the game processing unit makes the display unit display data about the game value.

6. The terminal device according to claim 5, **characterized in that** the selection unit selects display of the different image by the image processing unit, in accordance with the player's pressing a display area of the display unit, the display area showing the data about the game value.

7. The terminal device according to any one of claims 1 to 6, **characterized in that**:
the terminal device further comprises a list display command unit that, when the selection unit selects display of the different image by the image processing unit, makes the display unit list a plurality of selection objects; and
the image processing unit makes the display unit display, as the different image, an image corresponding to one of the listed selection objects selected by the player.

8. The terminal device according to claim 7, **characterized in that** the selection objects are programs of at least one of a television and a movie.

9. The terminal device according to claim 7, **characterized in that**:
the selection objects are foods; and
the terminal device further comprises a food order unit that orders one of the listed foods selected by the player.

10. A gaming machine **characterized by** comprising:
a plurality of the terminal devices as defined in any one of claims 1 to 9; and
a main body that is data-communicably connected to the respective terminal devices, and manages operations of the respective terminal devices so that all the terminal devices are linked thus sharing a game processing executed in any terminal device.

11. The gaming machine according to claim 10, **characterized by** further comprising a main display device that is placed so as to be seen from all the terminal devices and displays thereon operations of all the terminal devices.

12. A game method **characterized by** comprising the steps of:
a game processing in which a game image is displayed while a game with an acquirable game value is progressed;
an image processing in which an image different from the game image is displayed; and
a selection in which any one of the game processing step and the image processing step is selected in accordance with an input made by a player,
wherein, when the image processing step is selected in the selection step, the different image is displayed in this image processing step based on data about a different image display item which has been acquired in the course of the game.
